# EUROPÄISCHE PATENTSCHRIFT

(11) **EP 1 222 553 B1**
(45) Veröffentlichungstag und Bekanntmachung des Hinweises auf die Patenterteilung: **18.07.2007**
(21) Anmeldenummer: 00965852.7
(22) Anmeldetag: 20.09.2000
(51) Int. Cl.: G06F 13/362

(54) **VERFAHREN ZUM BETRIEB EINES PROZESSORBUSSES**
METHOD FOR OPERATING A PROCESSOR BUS
PROCEDE DE FONCTIONNEMENT D'UN BUS PROCESSEUR

(30) Priorität: 29.09.1999 DE 19946716
(43) Veröffentlichungstag der Anmeldung: 17.07.2002
(73) Patentinhaber: Infineon Technologies AG, 81669 München (DE)
(72) Erfinder: SEDLAK, Holger, 85658 Egmating (DE); KNIFFLER, Oliver, 81737 München (DE); GÄRTNER, Wolfgang, 80807 München (DE)
(74) Vertreter: Epping - Hermann - Fischer
(86) Internationale Anmeldenummer: PCT/DE2000/003273
(87) Internationale Veröffentlichungsnummer: WO 2001/024020

(56) Entgegenhaltungen:
- EP-A- 0 665 501
- PATENT ABSTRACTS OF JAPAN vol. 018, no. 169 (P-1714), 22. März 1994 (1994-03-22) & JP 05 334239 A (MATSUSHITA ELECTRIC IND CO LTD), 17. Dezember 1993 (1993-12-17)
- PATENT ABSTRACTS OF JAPAN vol. 1997, no. 02, 28. Februar 1997 (1997-02-28) & JP 08 272737 A (FUJITSU LTD;PFU LTD), 18. Oktober 1996 (1996-10-18)
- PATENT ABSTRACTS OF JAPAN vol. 018, no. 621 (P-1832), 25. November 1994 (1994-11-25) & JP 06 236347 A (FUJI XEROX CO LTD), 23. August 1994 (1994-08-23)

## Beschreibung

Die vorliegende Erfindung betrifft ein Verfahren zum Betrieb eines Prozessorbusses, mit dem eine zentrale Einheit (Prozessor) auf verschiedene periphere Einheiten zugreifen kann.

Bei den Prozessorsystemen gemäß dem Stand der Technik ist es üblich, dass der Prozessor selbst, also die zentrale Recheneinheit (CPU) über einen sogenennten Bus, das heißt, eine gemeinsame Datenleitung, mit den Peripheriegeräten (peripheren Einheiten) verbunden ist. Bei diesen Peripheriegeräten kann es sich um Speicher aller Art, Coprozessoren, Dateneinh- und ausgabegeräte handeln. Die Geschwindigkeit, mit denen diese Peripheriegeräte auf Datenanforderungen der Zentraleinheit reagieren können, ist natürlich abhängig von der Art der jeweiligen Geräte ganz unterschiedlich.

Gemäß dem bisherigen Stand der Technik blockiert ein Zugriff des Prozessors auf ein Peripheriegerät über den Bus den Prozessor so lange, bis dieser Zugriff abgeschlossen werden kann. Dadurch geht unnötigerweise Prozessorbetriebszeit, also Rechenleistung verloren.

Das Dokument PATENT ABSTRACTS OF JAPAN Bd. 018, Nr. 169 (P-1714), 22. März 1994 (1994-03-22) & JP 05 334239 A (MATSUSHITA ELECTRIC IND CO LTD), 17. Dezember 1993 (1993-12-17) offenbart eine Anordnung mit Bus-Mastern und Bus-Slaves. Ein Zugriff des Bus-Masters auf einen Bus-Slave wird abgelehnt, wenn dieser Zugriff nicht in einer vorgesehenen Zeit erfüllt werden kann. Der Zugriff erfolgt erneut, sobald dieser erfüllbar ist.

Es ist Aufgabe der vorliegenden Erfindung, unnötige Wartezeiten für einen Prozessor beim Zugriff auf periphere Einheiten, die Zugriff entweder ablehnen oder verzögern können, zu vermeiden.

Erfindungsgemäß wird diese Aufgabe in einem Verfahren zum Betrieb eines Prozessorbusses, mit dem eine zentrale Einheit (Prozessor) auf verschiedene periphere Einheiten, die Zugriff entweder ablehnen oder verzögern können, zugreift, dadurch gelöst, daß die peripheren Einheiten ihren Betriebszustand über den Prozessorbus an die zentrale Einheit melden und die Reihenfolge der Zugriffe in Abhängigkeit von dem Betriebszustand der peripheren Einheiten geändert werden kann, wobei die zentrale Einheit die Zugriffsversuche jeweils in bestimmten Abständen wiederholt, bis die periphere Einheit bereit ist, und die zentrale Einheit in den Zeiträumen zwischen den Zugriffsversuchen den Bus für anderen Datenverkehr nutzt.

Der einfachste Verfahrensablauf ergibt sich dabei, wenn die Zustandsmeldung einer peripheren Einheit im Anschluss an einen Zugriffsversuch der zentralen Einheit auf diese periphere Einheit erfolgt.

Weiter kann es vorteilhaft sein, wenn den peripheren Einheiten verschiedene Rückmeldungen, nämlich Ablehnung oder Verzögerung des Zugriffs zur Verfügung stehen. Im Falle der Verzögerung kann der Zugriffsversuch dann wiederholt werden, im Falle einer Ablehnung kann der Prozessor inzwischen andere Aufgaben bearbeiten.

Die vorliegende Erfindung beruht darauf, dass der Zugriff einer zentralen Einheit, beispielsweise des Prozessors, über einen Prozessorbus auf verschiede periphere Einheiten wie beispielsweise Speicher, Coprozessoren, Datenein- und ausgabegeräte durch die Signalisierung des Zustands der peripheren verschiedenen peripheren Einheiten priorisiert oder verzögert wird. Dabei können die verschiedenen peripheren Einheiten Zugriffe entweder ablehnen oder verzögern.

Die zentrale Einheit, also der Prozessor, kann mittels dieser Information ihre Zugriffe priorisieren und/oder verzögern und damit eine bessere Busauslastung und Gesamtperformance erzielen, da Wartezeiten auf die peripheren Einheiten minimiert werden.

Die Erfindung wird im folgenden anhand zweier Ausführungsbeispiele erläutert:
1. Eine CPU wird mit Speichern betrieben, wovon einige die Zugriffe verzögern, da ihre Zugriffszeit es nicht erlaubt, mit der höchsten Busgeschwindigkeit auf sie zuzugreifen. In einem solchen Falle setzt der Speicher erfindungsgemäß bei einem Zugriff, den er nicht mit der Bustaktgeschwindigkeit erfüllen kann, ein Signal, so daß dieser Zugriff wiederholt wird, bis der Speicher die Daten bereitgestellt hat. Es ist in diesem Falle also nicht erforderlich, die Arbeitsgeschwindigkeit der CPU auf die Geschwindigkeit des Speichers herabzusetzen oder die CPU auf den Speicher warten zu lassen. Eine gemäß dem Stand der Technik erforderliche solche Anpassung der CPU an die Geschwindigkeit des Speichers wird erfindungsgemäß vermieden.
2. Eine CPU wird mit einem Coprozessor betrieben, beispielsweise mit einem mathematischen oder einem graphischen Coprozessor, der einige Rechenzeit benötigt, und damit nicht immer aufnahmebereit ist. Signalisiert dieser Coprozessor, daß er nicht aufnahmebereit ist (der Zugriff wird also abgelehnt), so kann die CPU andere Zugriffe auf den Prozessorbus vorziehen und diesen Zugriff verschieben.

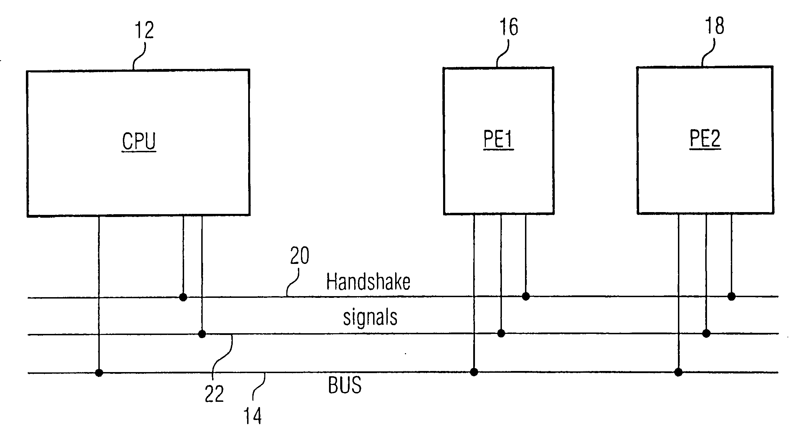

## Patentansprüche

1. Verfahren zum Betrieb eines Prozessorbusses, mit dem eine zentrale Einheit auf verschiedene periphere Einheiten, die Zugriff entweder ablehnen oder verzögern können, zugreift, wobei die peripheren Einheiten ihren Betriebszustand über den Prozessorbus an die zentrale Einheit melden und die Reihenfolge der Zugriffe in Abhängigkeit von dem Betriebszustand der peripheren Einheiten geändert werden kann, wobei die zentrale Einheit die Zugriffsversuche jeweils in bestimmten Abständen wiederholt, bis die periphere Einheit bereit ist, und bei Ablehnen des Zugriffes die zentrale Einheit in den Zeiträumen zwischen den Zugriffsversuchen den Bus für anderen Datenverkehr nutzt.

2. Verfahren nach Anspruch 1, **dadurch gekennzeichnet, dass** die Zustandsmeldung einer peripheren Einheit im Anschluss an einen Zugriffsversuch der zentralen Einheit auf die periphere Einheit erfolgt.

## Claims

1. Method of operating a processor bus, with which a central unit makes access to various peripheral units, which can either reject or delay access, wherein the peripheral units report their operating state to the central unit via the processor bus and the order of the accesses can be changed as a function of the operating state of the peripheral units, wherein the central unit repeats the access attempts, in each case at specific intervals, until the peripheral unit is ready and, when the access is rejected, the central unit uses the bus for other data traffic in the time periods between the access attempts.

2. Method according to Claim 1, **characterized in that** the reporting of the state of a peripheral unit follows an access attempt by the central unit to the peripheral unit.

## Revendications

1. Procédé pour faire fonctionner un bus de processeur par lequel une unité centrale accède à diverses unités périphériques qui peuvent décliner ou retarder l'accès, les unités périphériques annonçant leur état de fonctionnement à l'unité centrale par le bus de processeur et la succession des accès pouvant être modifiée en fonction de l'état de fonctionnement des unités périphériques, l'unité centrale répétant les tentatives d'accès, respectivement, à des intervalles de temps déterminés jusqu'à ce que l'unité périphérique soit prête et, lorsque l'accès est décliné, l'unité centrale utilisant le bus pour d'autres trafics de données dans les intervalles de temps compris entre les tentatives d'accès.

2. Procédé suivant la revendication 1, **caractérisé en ce que** l'indication d'état d'une unité périphérique s'effectue à la suite d'une tentative d'accès de l'unité centrale à l'unité périphérique.
